# FASCICULE DE BREVET EUROPEEN

(11) **EP 1 998 513 B1**
(45) Date de publication et mention de la délivrance du brevet: **25.11.2009**
(21) Numéro de dépôt: 08103384.7
(22) Date de dépôt: 04.04.2008
(51) Int. Cl.: H04L 12/56, H04L 29/06

(54) **Procédé et dispositif de tamponnage de paquets de données transmis via une communication plésiochrone**
Pufferungsverfahren und -vorrichtung für Datenpakete, die über eine plesiochrone Verbindung übertragen werden
Method and device for buffering data packets transmitted via plesiochronous communication

(30) Priorité: 30.05.2007 FR 0755324
(43) Date de publication de la demande: 03.12.2008
(73) Titulaire: Alcatel Lucent, 75008 Paris (FR)
(72) Inventeur: Stephan, Yannick, 22730 Tregastel (FR); Louargant, Michel, 22300 Lannion (FR)
(74) Mandataire: Nicolle, Olivier

(56) Documents cités:
- EP-A- 1 195 956
- EP-A- 1 322 074

## Description

La présente invention se rapporte au tamponnage (buffering) de paquets de données transmis entre une entité émettrice et une entité réceptrice via une communication plésiochrone, dans laquelle lesdites entités émettrice et réceptrice utilisent des horloges indépendantes entre elles.

Elle trouve une application générale dans les équipements fonctionnant selon le protocole IP (« Internet Protocol »), et plus particulièrement les équipements recevant des flux (audio, vidéo et/ou données), tels que les équipements du type terminaux, ponts, passerelles, ou éléments du réseau supportant la voix sur IP (VOIP, « Voice Over IP »).

D'une manière générale, au niveau de l'entité réceptrice, une mémoire organisée en mode premier entré-premier sorti (FIFO, First in-first out), permet de compenser la gigue de réseau reçue sur le flux de paquets entrant afin de restituer en sortie de mémoire un flux à débit constant.

On rappelle que la gigue réseau est un retard variable engendré dans toute communication asynchrone en mode paquet. Elle peut entraîner au niveau d'un récepteur de paquets, d'une part des trous (« starvation », manque de signal à restituer, le paquet arrivant trop tard) et d'autre part une surabondance (« overflow », dépassement de la capacité de stockage de la mémoire).

Une des techniques connues de gestion de la gigue est l'utilisation d'un seuil de tamponnage adaptatif dont la valeur peut varier dans une plage définie par une borne minimale et une borne maximale. La valeur du seuil est augmentée (sans dépasser la limite supérieure de la plage) lorsque la gigue observée au niveau du récepteur est supérieure au seuil programmé tandis qu'elle est réduite (sans dépasser la limite inférieure de la plage) lorsque la gigue observée au niveau du récepteur est inférieure au seuil programmé.

Voir par exemple le document EP 1 195 956 pour un tel procédé.

Un tel mécanisme de gestion de la gigue n'est pas satisfaisant en cas d'appel plésiochrone.

En effet, appliqué à l'appel plésiochrone, le mécanisme de gestion de la gigue conduit à un besoin de compensation continue dans la même direction (vers la limite basse ou haute selon les cas). Inévitablement, la limite de compensation va être dépassée. Ainsi, en respectant les limites du seuil, celui-ci ne sera plus adapté. Il en résulte des périodes de manque (starvation) ou de surabondance (overflow) dont la fréquence dépend de la différence entre le débit des paquets reçus en entrée de mémoire tampon et le débit en sortie de mémoire tampon.

Aucune solution actuelle ne tient compte de l'effet provoqué par cette inégalité de fréquence d'horloge entre les entités émettrice et réceptrice d'une communication plésiochrone.

La présente invention remédie à cet inconvénient.

Elle porte sur un procédé de tamponnage de paquets de données numériques émanant d'une source émettrice à travers un réseau de communication, dans lequel on enregistre dans une mémoire tampon des éléments obtenus à partir des paquets reçus.

Selon une définition générale de l'invention, on mesure l'écart entre le débit du flux de paquets entrant et le débit en sortie de la mémoire tampon, et en cas d'égalité on enregistre les éléments reçus en mode standard avec un seuil de tamponnage adaptatif variant dans une plage limitée tandis qu'en cas d'inégalité on enregistre en mode libre avec un seuil de tamponnage adaptatif variant dans une plage libre définie sans borne minimale et maximale, de manière à compenser ledit écart.

Ainsi, en présence d'un appel provenant d'une communication plésiochrone, telle que celle fonctionnant selon le protocole IP, le procédé selon l'invention a l'avantage de mettre en place un mécanisme d'enregistrement des paquets susceptible de supprimer les inconvénients découlant de l'inégalité de fréquence d'horloge entre les deux extrémités d'une communication plésiochrone.

En particulier, le procédé selon l'invention permet de compenser progressivement le manque ou l'excès de paquets au niveau de la mémoire tampon découlant de l'inégalité de fréquence d'horloge entre les deux extrémités d'une communication plésiochrone.

Selon une réalisation, la mesure de l'écart de débit est réalisée en permanence, à une cadence choisie.

En pratique, le seuil de tamponnage adaptatif est un nombre d'éléments enregistrés.

Par exemple, la mémoire tampon est de type FIFO.

La présente invention a également pour objet un dispositif de tamponnage de paquets de données numériques émanant d'une source émettrice à travers un réseau de communication, comprenant des moyens d'enregistrement aptes à enregistrer dans une mémoire tampon des éléments obtenus à partir des paquets reçus.

Selon un autre aspect de l'invention, le dispositif de tamponnage comprend en outre des moyens de mesure aptes à mesurer l'écart entre le débit du flux de paquets entrant et le débit en sortie de la mémoire tampon, et en cas d'égalité lesdits moyens d'enregistrement étant aptes à enregistrer les éléments reçus en mode standard avec un seuil de tamponnage adaptatif dont la valeur se déplace dans une plage limitée tandis qu'en cas d'inégalité les moyens d'enregistrement étant aptes à enregistrer en mode libre avec un seuil de tamponnage adaptatif dont la valeur se déplace dans une plage libre de manière à compenser ledit écart.

D'autres caractéristiques et avantages de l'invention apparaîtront à la lumière de la description détaillée ci-après et des dessins dans lesquels :
- la **figure 1** illustre de façon schématique et fonctionnelle une partie d'un réseau de communication où l'invention trouve application;
- la **figure 2** est un diagramme illustrant de manière détaillée les éléments constitutifs d'une entité émettrice et d'une entité réceptrice mettant en oeuvre le procédé selon l'invention; et
- les **figures 3A** à **3D** sont des chronogrammes illustrant le procédé selon l'invention.

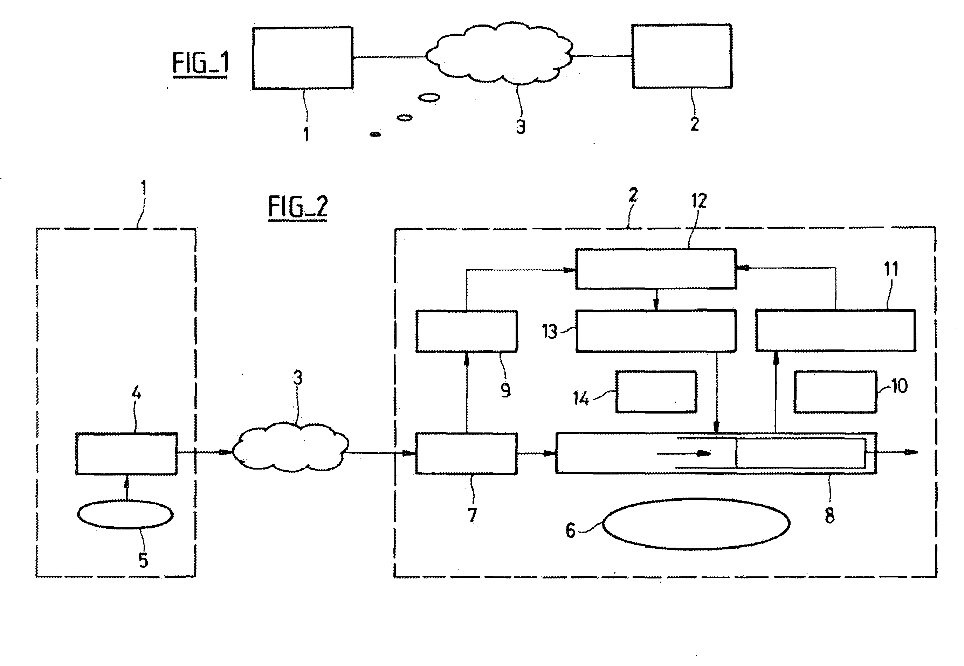

En référence à la **figure 1**, on a représenté un scénario d'un appel téléphonique entre une entité émettrice 1 (l'appelant) et une entité réceptrice 2 (l'appelé) à travers un réseau de communication 3. Le protocole de communication est par exemple le protocole IP.

L'entité émettrice 1 est par exemple un utilisateur d'un réseau de communication mobile connecté au réseau 3 à travers une passerelle de type « trunk gateway » (non représentée). De son côté, l'entité réceptrice 2 est par exemple un utilisateur connecté au réseau IP 3 via une carte réseau et un modem (non représentés).

Bien évidemment, l'invention n'est pas limitée à ce scénario mais s'applique à tout réseau de communication utilisant un protocole de transport de paquets.

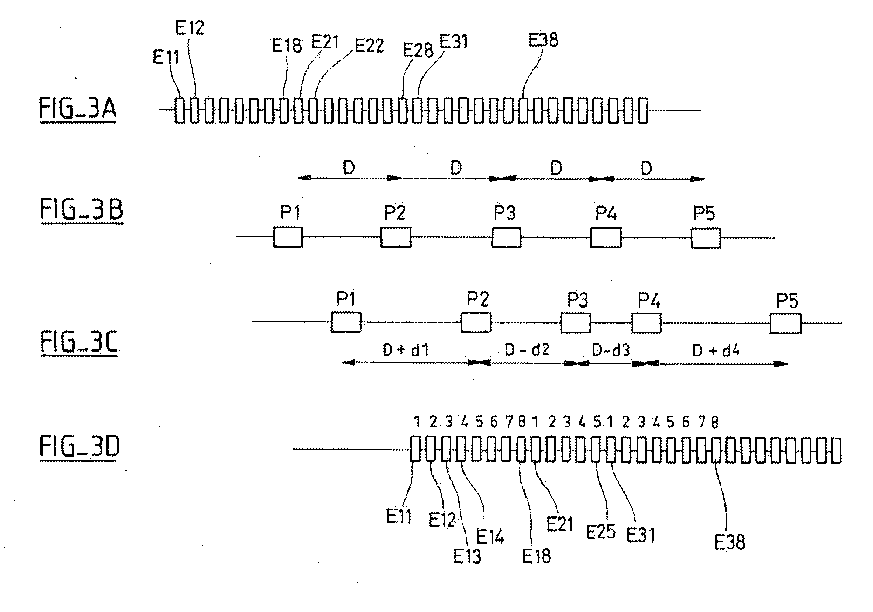

En référence à la **figure 2**, l'entité émettrice 1 comprend un générateur de paquets de données 4 cadencé selon une horloge locale 5. Le débit des échantillons Eij avant paquétisation est représenté en **figure 3A**.

En référence à la **figure 3B**, les paquets P issus de l'émetteur 1 (individualisés en P1 à P5) sont séparés les uns des autres d'un intervalle D constant.

On fait à nouveau référence à la **figure 2****.**

De son côté, l'entité réceptrice 2 comprend une horloge locale 6, distincte et indépendante de l'horloge émettrice 5.

Le récepteur 2 comprend une interface 7 implémentant des protocoles IP, UDP et RTP pour recevoir les paquets IP et extraire leur contenu.

Une mémoire tampon 8 reçoit les paquets issus de l'interface 7. La mémoire tampon 8 est de type FIFO (« First In-first Out »).

En référence à la **figure 3C****,** on a représenté le flux des paquets P à l'entrée de la mémoire 8. L'intervalle entre deux paquets P n'est pas constant mais varie en fonction de la gigue réseau. Par exemple, l'intervalle entre les paquets P1 et P2 est égal à D+d1 où d1 est un délai supplémentaire découlant de la gigue réseau. Cet intervalle entre P2 et P3 est par exemple égal à D-d2 où d2 est un délai différent et distinct de D2.

En référence à la **figure 3D****,** on a représenté les éléments Eij en sortie de mémoire 8. On observe que les échantillons E26, E27,et E28 manquent en raison du seuil adaptatif borné de l'art antérieur mentionné ci-avant.

De façon surprenante, le Demandeur a observé que dans le contexte d'appel plesiochrone, il est souhaitable de supprimer les limites de la plage entre lesquelles peut varier le seuil de tamponnage adaptatif de la mémoire 8.

Grâce à cette suppression de limites, les périodes de manque ou de surabondance en présence d'appel plésiochrone sont anticipées et la compensation peut être réalisée avec une finesse dépourvue d'effet négatif à l'égard de la qualité de la voix.

Ainsi, la mémoire 8 est équipée d'un mécanisme qui va détecter la présence d'appel plesiochrone, c'est-à-dire la présence d'un écart entre le débit du flux de paquets entrant et le débit en sortie de la mémoire tampon.

En cas d'égalité, la mémoire 8 enregistre les éléments reçus en mode standard avec un seuil de tamponnage adaptatif dont la valeur se déplace dans une plage limitée. Il s'agit d'un enregistrement mis en oeuvre selon les règles classiques connues d'enregistrement dans une mémoire FIFO.

Par contre, en cas d'inégalité, on enregistre dans la mémoire 8 en mode libre avec un seuil de tamponnage adaptatif dont la valeur se déplace dans une plage libre (sans limites, appelé encore « free run »), de manière à compenser l'écart entre le débit des paquets émis/reçus et le débit en sortie de mémoire tampon.

Pour mesurer cet écart, il est prévu de réaliser deux opérations de mesure, l'une consistant à mesurer le débit du flux de paquets entrant et l'autre consistant à mesurer le débit en sortie de mémoire.

En pratique, la première opération de mesure est réalisée par des premiers moyens de mesure 9 aptes à traiter les informations disponibles dans les couches transport du réseau telles que les couches RTP pour en déduire l'écart du réseau.

La seconde opération de mesure est avantageusement réalisée indépendamment de la source. Par exemple, elle s'appuie sur l'analyse de la moyenne du nombre d'échantillons disponibles en sortie de mémoire. Cette seconde opération est ainsi menée sur l'observation du débit en sortie de mémoire tampon sans aucune information de la source.

Pour réaliser cette seconde opération, des moyens de lecture 10 lisent le niveau de tamponnage (buffering level) et indiquent le niveau ainsi lu à des seconds moyens de mesure 11.

Des moyens de traitement 12 reçoivent les informations des premiers moyens de mesure 9 et des seconds moyens de mesure 11 pour en déduire l'écart entre le débit du flux de paquets entrant et le débit en sortie de mémoire et en déduire la présence ou absence d'appel plésiochrone.

En cas de détection d'appel plesiochrone, les moyens de traitement 12 adaptent (13) le niveau de seuil de tamponnage de manière libre (« free run ») sans aucune limite, ni supérieure, ni inférieure.

En pratique, les moyens d'adaptation 13 modifient (écriture 14) le niveau de tamponnage adaptatif en fonction de l'écart ainsi mesuré, cette adaptation n'étant nullement limitée par une borne maximale ou une borne minimale habituellement utilisées dans les solutions antérieures ou lorsque l'appel n'est pas identifié comme plesiochrone.

Une telle absence de limites dans la plage de valeurs du seuil permet de compenser progressivement l'écart entre le débit des paquets émis et le débit de paquets en sortie de mémoire.

De préférence, la mesure de l'écart est réalisé en permanence, selon une cadence choisie, par exemple en fonction de l'arrivée des paquets ou du niveau de remplissage de la mémoire.

## Revendications

1. Procédé de tamponnage de paquets de données numériques émanant d'une source émettrice (1) à travers un réseau de communication (3), dans lequel on enregistre dans une mémoire tampon (8) des éléments obtenus à partir des paquets reçus, **caractérisé en ce qu'**on mesure l'écart entre le débit du flux de paquets entrant et le débit en sortie de la mémoire tampon, et en cas d'égalité on enregistre les éléments reçus en mode standard avec un seuil de tamponnage adaptatif dont la valeur varie dans une plage limitée tandis qu'en cas d'inégalité on enregistre en mode libre avec un seuil de tamponnage adaptatif dont la valeur se déplace dans une plage libre, de manière à compenser progressivement ledit écart.

2. Procédé selon la revendication 1, dans lequel la mesure de l'écart de débit est réalisée en permanence, selon une cadence choisie.

3. Procédé selon la revendication 1 dans lequel le seuil de tamponnage est un nombre d'éléments enregistrés.

4. Procédé selon la revendication 1, dans lequel la mémoire tampon (8) est de type FIFO.

5. Dispositif de tamponnage de paquets de données numériques émanant d'une source émettrice (1) à travers un réseau de communication (3), comprenant des moyens d'enregistrement aptes à enregistrer dans une mémoire tampon (8) des éléments obtenus à partir des paquets reçus, **caractérisé en ce qu'**il comprend en outre des moyens de mesure (9, 10, 11,12) aptes à mesurer l'écart entre le débit du flux de paquets entrant et le débit en sortie de la mémoire tampon, et en cas d'égalité lesdits moyens d'enregistrement étant aptes à enregistrer les éléments reçus en mode standard avec un seuil de tamponnage adaptatif dont la valeur se déplace dans une plage limitée tandis qu'en cas d'inégalité les moyens d'enregistrement étant aptes à enregistrer en mode libre avec un seuil de tamponnage adaptatif dont la valeur se déplace dans une plage libre de manière à compenser progressivement ledit écart.

## Claims

1. Buffering method for digital data packets coming from a transmitting source (1) through a communication network (3), in which elements obtained from the packets received are saved in a buffer memory (8), **characterised in that** the difference between the incoming packet flow rate and the outgoing rate from the buffer memory is measured, and if they are equal, the elements received in standard mode are saved with an adaptive buffering threshold for which the value varies within a limited range, while if they are not equal, the elements are saved in free mode with an adaptive buffering threshold for which the value moves within a free range, so as to progressively compensate for said difference.

2. Method according to claim 1, in which the measurement of the difference in rate is taken permanently, at a chosen frequency.

3. Method according to claim 1 in which the buffering threshold is a number of saved elements.

4. Method according to claim 1, in which the buffer memory (8) is of the FIFO type.

5. Buffering device for digital data packets coming from a transmitting source (1) through a communication network (3), comprising means able to save elements obtained from the packets received in a buffer memory (8), **characterised in that** it also comprises means (9, 10, 11, 12) able to measure the difference between the incoming packet flow rate and the outgoing rate from the buffer memory, and if they are equal, said saving means being able to save the elements received in standard mode with an adaptive buffering threshold for which the value moves within a limited range, while if they are not equal, the saving means are able to save in free mode with an adaptive buffering threshold for which the value moves within a free range, so as to progressively compensate for said difference.

## Patentansprüche

1. Verfahren zum Puffern von digitalen Datenpaketen, welche von einer Übertragungsquelle (1) über ein Kommunikationsnetzwerk (3) gesendet werden, wobei man Elemente, die aus den empfangenen Paketen erhalten werden, in einem Pufferspeicher (8) abgelegt, **dadurch gekennzeichnet, dass** man den Unterschied zwischen dem Durchsatz der im Pufferspeicher eingehenden und dem Durchsatz der aus dem Pufferspeicher ausgehenden Datenpakete misst, und, wenn die Messergebnisse identisch sind, die empfangenen Elemente im Standardmodus mit einem anpassbaren Pufferschwellwert, welcher innerhalb eines begrenzten Bereichs varriert, speichert, und, wenn die Messergebnisse verschieden sind, diese im freien Modus mit einem anpassbaren Pufferschwellwert, welcher sich in einem freien Bereich bewegt, speichert, um den besagten Unterschied allmählich auszugleichen.

2. Verfahren nach Anspruch 1, wobei der Durchsatzunterschied fortlaufend gemäß einer gewählten Kadenz gemessen wird.

3. Verfahren nach Anspruch 1, wobei der Pufferschwellenwert einer Anzahl von gespeicherten Elementen entspricht.

4. Verfahren nach Anspruch 1, wobei der Pufferspeicher (8) ein FIFO-Speicher ist.

5. Vorrichtung zum Puffern von digitalen Datenpaketen, welche von einer Übertragungsquelle (1) über ein Kommunikationsnetzwerk (3) gesendet werden, wobei die Vorrichtung Speichermittel umfasst, die dazu ausgelegt sind, aus den empfangenen Datenpaketen erhaltene Elemente in einem Pufferspeicher (8) abzulegen, **dadurch gekennzeichnet, dass** sie weiterhin Messmittel (9, 10, 11, 12) umfasst, welche dazu ausgelegt sind, den Unterschied zwischen dem Durchsatz der im Pufferspeicher eingehenden Pakete und dem Durchsatz der aus dem Pufferspeicher ausgehenden Datenpakete zu messen, und dass die besagten Speichermittel fähig sind, bei identischen Messergebnissen die empfangenen Elemente im Standardmodus mit einem anpassbaren Pufferschwellwert, welcher innerhalb eines begrenzten Bereichs variiert, zu speichern und, wenn die Messergebnisse verschieden sind, diese im freien Modus mit einem anpassbaren Pufferschwellwert, welcher sich in einem freien Bereich bewegt, zu speichern, um den besagten Unterschied allmählich auszugleichen.
